# EUROPEAN PATENT SPECIFICATION

(11) **EP 0 918 625 B1**
(45) Date of publication and mention of the grant of the patent: **02.11.2000**
(21) Application number: 97930696.6
(22) Date of filing: 24.07.1997
(51) Int. Cl.: B31D 3/00, B31D 3/02

(54) **CORE OF CORRUGATED CARDBOARD, METHOD AND APPARATUS FOR ITS MANUFACTURE**
KERN AUS GEWELLTER PAPPE, VERFAHREN UND VORRICHTUNG ZU SEINER HERSTELLUNG
AME EN CARTON ONDULE, SON PROCEDE ET SON APPAREIL DE PRODUCTION

(30) Priority: 30.07.1996 DE 19630583; 28.12.1996 DE 19654672
(43) Date of publication of application: 02.06.1999
(73) Proprietor: Swap Technology AG, 9200 Gossau (CH)
(72) Inventor: ISELI, Alfred, (Fredy), CH-8592 Uttwil (CH)
(74) Representative: Münch, Otto, Dipl.-Ing.
(86) International application number: IB9700921
(87) International publication number: WO9804401

(56) References cited:
- WO-A-96/31339
- FR-A- 2 195 940
- FR-A- 2 474 950
- GB-A- 939 979
- GB-A- 1 001 115
- US-A- 3 600 249
- US-A- 3 616 119
- US-A- 3 912 573
- US-A- 4 096 305
- US-A- 4 623 412
- US-A- 4 911 775
- PATENT ABSTRACTS OF JAPAN vol. 018, no. 055 (M-1550), 28 January 1994 & JP 05 278153 A (TOPPAN PRINTING CO LTD), 26 October 1993,

## Description

The invention relates to a core of corrugated cardboard made of corrugated cardboard strips laid flat against one another. In addition, the invention covers a method and apparatus suitable for its manufacture.

In EP-B-0 584 303, a pallet is described which has a board which contains a honeycomb core made of layers of corrugated cardboard glued onto one another. Their corrugation longitudinal direction runs perpendicular to the plane of the board. Such honeycomb cores are manufactured by large-area corrugated cardboard blanks being glued onto one another and then being sawn up into slices perpendicular to the corrugation longitudinal direction.

FR-A-2 474 950 describes a core of corrugated cardboard composed of superimposed layers. The core is plunged into a bath of liquid resin such that the entire surface of all paper webs forming the corrugated cardboard layers is wetted. The resin is then hardened, and the block obtained in this way may be cut into individual cores of the desired thickness along planes perpendicular to the longitudinal extension of the corrugations.

The invention is based on the object of providing a method and an apparatus with which high-quality cores of corrugated cardboard can be manufactured cost-effectively.

This object is achieved by the combination of features of the independent patent claims.

Further advantages, features and details of the invention emerge from the following description of preferred exemplary embodiments, as well as by reference to the drawing, in which:
- Figure 1: shows the diagrammatic top view of a device for cutting strips from a corrugated cardboard web,
- Figure 2: shows a side view of a coating device,
- Figure 3: shows an oblique view of a composite board which is reproduced broken down into individual elements,
- Figure 4: shows an oblique view of a group of composite boards,
- Figure 5: shows an oblique view of part of a building made of composite board,
- Figure 5a: shows one of the composite boards of Figure 5 in an illustration which is rotated and enlarged with respect to the latter,
- Figures 6 and 6a: show a second embodiment of an apparatus for manufacturing cores, and
- Figure 7 and 7a: show a third embodiment.

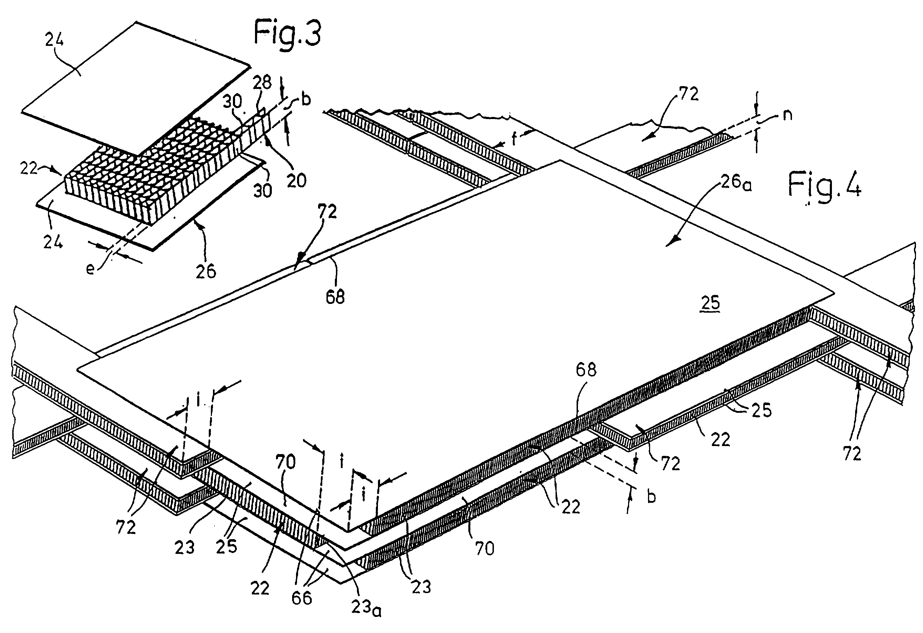

In the production of corrugated cardboard boards from a corrugation 28 (Figure 3) and a carrier paper 30 which in bonded to one side or both sides of the crests of the corrugations, the continuously moved web is cut into a plurality of individual webs, whose width is matched to the product to be manufactured - for example to the dimensions of packaging containers. In this case, so-called side runs up to 50 cm wide and edge sections on both sides of a width of about 5 to 10 mm occur. These side runs and edge sections were previously recycled as waste paper.

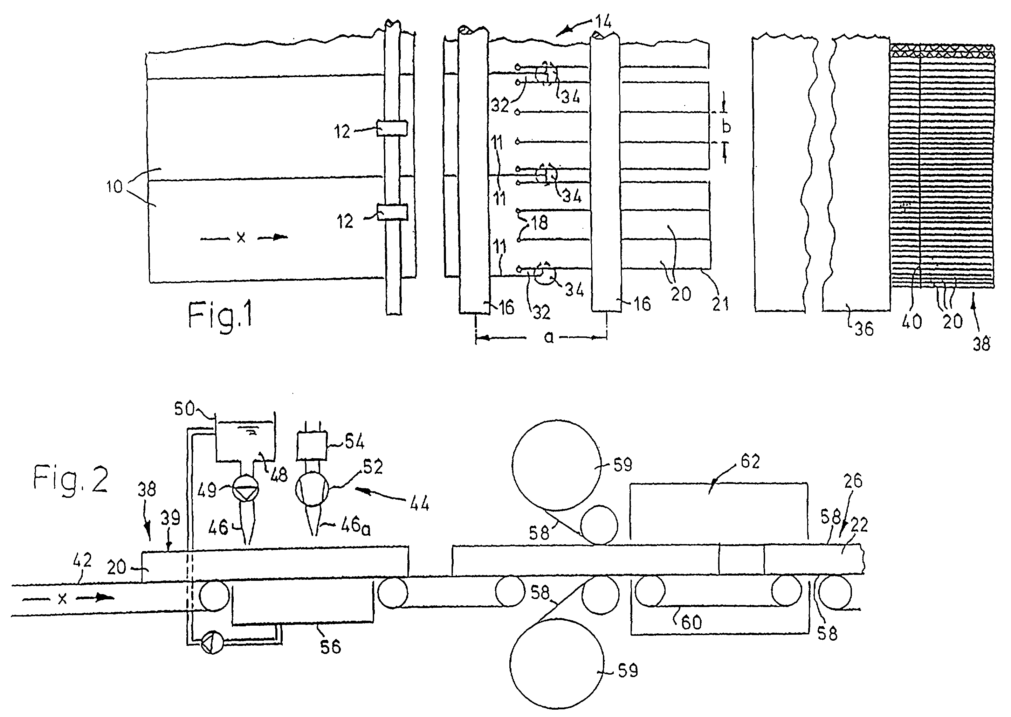

Side runs 10 of this type which are stacked alongside one another on a pallet and cut to a uniform length are, according to Figure 1, fed by a vacuum conveyor belt or by draw-off rollers 12 in the conveying direction x to a longitudinal cutting device 14. The latter contains, at a distance a from one another, two pairs of advance rollers 16 between which a plurality of - laterally adjustable - narrow nozzles 18 are arranged. The side runs 10 are separated by means of high-pressure water jets from the nozzles 18 into strips 20, whose width b corresponds to the thickness of the cores 22 of corrugated cardboard to be manufactured from them. Instead of using water jets, the side runs 10 can also be cut into the strips 20 by rotating, disc-shaped knives. Along each edge 11 of the side runs 10, a narrow edge zone 32 is cut off and sucked away by suction nozzles 34. The strips 20 are subsequently rotated by 90° in a turning device 36 and placed onto their longitudinal edges 21 and pushed against one another with their side surfaces formed by the carrier paper 30.

The strips 20, made of multiple layers of side runs, are combined in this way to form a horizontal stack 38, whose thickness corresponds to that of the core 22 of corrugated cardboard to be produced. In each case at least two threads of glue 40 are bonded to the upper and lower side of the stack 38, in order that the stack 38 is held together for the following method steps.

The longitudinal cutting device 14 described is expediently dimensioned such that corrugated cardboard blanks or webs up to about 2.5 m wide can be processed; in this case, it is possible not only for side runs 10 but also wider blanks - in particular also those from used corrugated cardboard articles - to be recycled.

According to Figure 2, the stack 38 is fed continuously via a conveyor belt 42 to a coating station 44. From a flat nozzle 46 extending transversely to the conveying direction x and directly above the surface 39 of the stack 38 to be treated - or a row of individual nozzles - a continuous mist of liquid coating material 48 is applied on the surface 39. The coating material 48 is fed to the flat nozzle 46 from a container 50 via a pump 49.

The flat nozzle 46 is followed in the conveying direction x by a further - but wider - flat nozzle 46ₐ or a further row of individual nozzles transverse to the conveying direction x above the surface 39. This flat nozzle 46ₐ is connected to a blower 52 which sucks air in through a heating device 54. By means of the air steam from the second flat nozzle 46ₐ the layer of coating material 48 on the surface 39 of the stack 38 is blown through the corrugation cavities of the strips 20, with the result that the entire stack 38 is coated with the coating material 48. By preheating the air, predrying is performed at the same time. The surplus coating material 48 exiting at the underside of the stack 38 is caught in a tray 56 and pumped back into the container 50. It may be expedient already to preheat the stack 38 upstream of the coating station 44, using hot air.

Kraft paper 58 can be applied to one side or both sides of the coated stack 38, the said Kraft paper being drawn off from supply reels 59. The Kraft paper 58 may be glued on the side facing the stack 38 - for example using the coating material 48; under certain circumstances, gluing by means of the not yet hardened coating material 48 is sufficient. The stack 38 then passes on a rod chain 60 through a continuous oven 62, in which the coating material 48 is hardened and dried. The finished cores 22 of corrugated cardboard, with or without the single-sided or double-sided Kraft paper layer 58, are then transported away for further processing.

In a special arrangement, the continuous oven 62 is arranged upstream of the station for the application of the Kraft paper 58. In this case, the upper side of the cores 22 may be surface-ground before the application of the Kraft paper 58.

Water glass, that is to say a solution of sodium silicate or potassium silicate with about 64% by weight of water, is especially suitable as the coating material 48. For the present application particularly suitable are water glass solutions with molecular weight ratio of 1,0 to 4,1 and a silicate content of 10% to 35% depending on the composition of the water glass or the water glass mixture. In order to improve the properties of the water glass which are disadvantageous for the present application, e.g. water retaining properties, high drying temperatures, brittleness, wetting properties on the surfaces to be coated, viscosity etc. according to the present invention amorphe, colloidal silicate solutions and/or organic co- and/or terpolymeres are added to the water glass mixture. When drying, this mixture forms water containing compact gels. Once formed, these gels completely de-waterize without change in volume at relatively low drying temperatures and drying times. Corrugated cardboard cores 22 (and covering boards 25) coated with this coating have a very high strength on pressure, shear and bending. They are largely fire-resistant and, in contrast to pure water glass, water-resistant. They are fully recyclable. The additives mentioned above do not significantly increase the costs of the water glass.

However, other liquids are also considered as the coating material, for example liquid synthetic resin, which is subsequently hardened, urea or urea compounds. If need be, mixtures of various liquids can also be used or various coating solutions can be applied one after another.

Using the described method according to the invention it is possible to manufacture in a cost-effective manner industrial cores 22 which approximately achieve the strength values of honeycombs, which are not produced industrially and are therefore very expensive, made of Kevlar or carbon fibres - for example for the aircraft industry.

This described solution for the manufacture of a core has a series of considerable advantages:
- the raw material is cheap, since it can be output by the corrugated cardboard manufacturer at a waste-paper price;
- for the corrugated cardboard manufacturer, the costly preparation of the side runs to make pulp is dispensed with;
- it is possible to recycle all the possible grades of corrugated cardboard, for example single-flute, single-sided or double-sided or multi-flute;
- the side runs have a high quality, since in the case of corrugated cardboard the smooth, uncorrugated carrier papers usually consist of Kraft paper, that is to say paper with a high pulp proportion of over 60% and a weight per unit area of 150 to 400 g/m²;
- the products from these boards can readily be recycled - even many times;
- high static load-bearing ability of the composite boards, and beneficial insulation values;
- resistance of the core to water, rot, fire, insects etc.

The core 22 is preferably a constituent of the composite board 26 made of cardboard which is described in relation to Figure 3. This composite board can be cut suitably to a desired format, likewise by means of thin high-pressure water jets or by sawing. Grey cardboard blanks can be glued onto the core 22 with or without Kraft paper layers 58, on both sides, and further grey cardboard strips can be glued onto the end faces of the composite board 26. This composite board 26 is preferably further sheathed using Kraft paper and, if appropriate, further impregnated, or the composite board 26 can be sheathed using a so-called sandwich liner (two-sided Kraft liner with a paraffin wax layer), which allows it to become waterproof. This produces a high-value, fully recyclable composite board 26.

For special purposes of use, covering sheets made of other materials than grey cardboard can be bonded onto the composite board 26 or the core 22, for example plasterboard or plaster building boards, wooden boards, plywood boards, wood fibre boards or chipboards, cement fibre boards, but also sheet metal, for example made of steel or light metal, or boards made of fibre-reinforced plastic. These composite boards 26 have excellent strength and loadbearing capacity at a low weight, because of the cores made of corrugated cardboard, so that they have many applications, for example for the internal fitting of buildings, for exhibition stands, items of furniture or the like. In addition, they achieve high thermal insulation values.

Figure 4 shows a rectangular composite or multi-ply board 26ₐ having three cores 22 and four covering boards 25. The covering boards 25 of the various plies may consist of different materials. The end faces 23 of the two outer cores 22 are set back by a dimension i at the narrow sides with respect to the end edges 66 of the covering boards 25. In addition, the respective side surface 23ₐ of the central core 22 runs at a distance i from the longitudinal edges 68 of its covering boards 25. In both cases this produces marginal grooves 70 of a depth i, into which, for the purpose of connecting identical composite boards 26ₐ which abut each other at the ends, plug-in strips 72 can be inserted and, if appropriate, bonded. The central core 22 does not need to be continuous; this produces ducts for lines to be led through. The plug-in strips 72 can likewise be constructed as composite boards having a core 22 and two covering boards 25, their thickness n advantageously corresponding to the thickness b of the central core 22 of the multi-ply board 26ₐ and their width f corresponding approximately to twice the groove depth i. Thanks to these plug-in strips 72 for the marginal grooves 70 - six in Figure 4 - variable installation possibilities for the multi-ply board 26ₐ are produced.

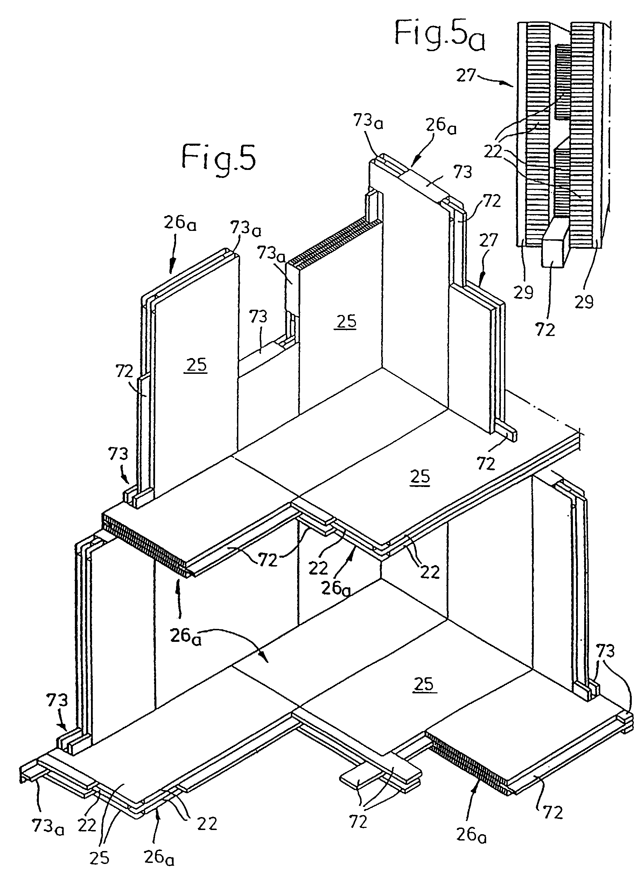

A section of a house made of a number of composite boards 26ₐ as wall and ceiling panels, plug-in strips 72 and additional termination strips 73, 73ₐ is sketched in Figure 5. The termination strips 73, 73ₐ serve as a boundary for the end faces not connected to another composite board 26ₐ; one type of termination strips 73 is U-shaped in cross-section for insertion into the narrow-sided marginal grooves 70. The other shape of the termination strips 73ₐ is of T-shaped cross-section to terminate the end face on the long side. The strips 72, 73, 73ₐ can be bonded to the composite boards 26ₐ.

The house is erected on an annular foundation, on a number of individual foundations, on at least two strip foundations or on cellar walls and expediently anchored thereto, for example by means of tension rods which cannot be seen, which engage through ducts in the lowest composite board 26ₐ and are anchored at their upper end face.

A composite board is sketched at 27 in Figures 5, 5a as a non-load-bearing intermediate wall which, by comparison with conventional partition systems, can be produced more cost-effectively and on site can be mounted more simply and more rapidly. It comprises three cores 22, indicated in Figure 3, as the wall core and two outer boards 29 made of plasterboard. This intermediate wall 27, in which cutouts for later installations can be seen, replaces the construction using uprights which is needed in the previously widespread partition systems. The desired outer board 28 made of plasterboard, chipboard, plywood or other boards are applied on both sides to this wall core. The lightness of the construction permits relatively large parts to be produced, which can be mounted simply and rapidly on site. The intermediate walls 27 are driven into a metal rail at the bottom and into a tongue at the top, which are mounted in advance.

A building is expediently modularly constructed, so that no adaptation work in necessary on site. By means of the method of construction described, a building can be manufactured extremely efficiently, rapidly and cost-effectively. The composite boards 26ₐ offer the dual function as a load-bearing structure on the one hand and excellent thermal insulation on the other hand, and are also suitable for the manufacture of thermally-insulated roofs.

If the core 22 is produced without Kraft paper 58, or with Kraft paper 58 glued to only one side, it is even suitable for the manufacture of cylindrical composite boards, which are shaped in a mould like a cylindrical segment or on a cylindrical mandrel. Like the lightweight composite board 26ₐ, these cylindrical composite boards can also be constructed with several layers. In the case of a three-layer construction, for example, ducts which run in the circumferential direction may also be cut out of the central layer. In the case of several composite boards abutting one another in the circumferential direction, tension anchors, for example cords or straps, may be tensioned through these ducts. This makes it possible to build wide, self-supporting domes.

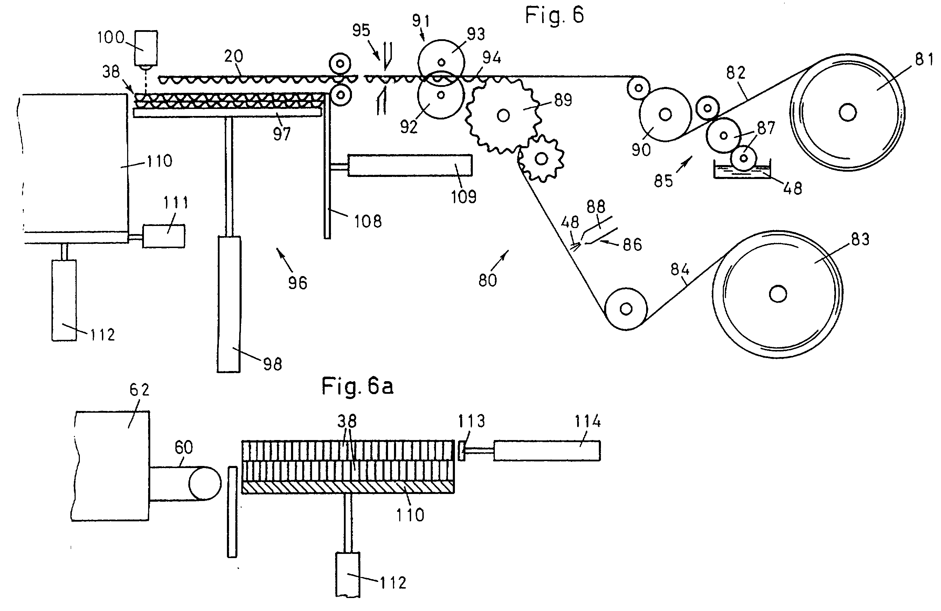

Figure 6 shows a further possibility for the manufacture of a core according to the invention. A supply reel 81 for the carrier paper 82 and a supply reel 83 for the corrugation 84 are mounted in a corrugated cardboard manufacturing machine 80. Both the carrier paper 82 and the corrugation 84 are led over a coating station 85, 86 each, in which the two paper webs are coated over their entire area with the coating material 48. In the example illustrated, the coating material 48 is applied to the carrier paper 82 using rolls 87, to the corrugation 84 using spray nozzles 88 before the two webs 82, 84 are bonded together on the corrugating roll 89. Downstream of the coating station 85, the carrier paper 82 is led over a heated roll 90, on which the coating material 48 is partially hardened.

The machine 80 is adjoined by a longitudinal cutting device 91 having a multiplicity of disc-shaped cutting-knife pairs 92, 93, whose spacing from one another corresponds to the core thickness b to be manufactured. The strips 20 are cut from the corrugated cardboard 94 using said knives. The strips 20 are then cut to a constant length by a transverse cutter 95 and stacked on a stacker 96. The stacker 96 has a vertically movable table 97, which is gradually lowered by means of a lifting element 98 during the formation of the stacks 38. The lowering movement is controlled by a sensor 100 in such a way that the upper side of the stacks 38 is always slightly below the underside of the delivered strips 20.

As soon as the lifting element 98 has reached a lower end position, the stacks 38 are ejected by a further lifting element 109, by means of a plunger 108, onto a tilting element 110 which is of L-shaped cross-section. After pulling back the plunger 108, the table 97 is lifted once more into its upper end position and new stacks 38 are formed.

The tilting element 110 tilts about its lower rear edge by means of a motor 111, with the result that the stacks 38 are layered one above the other lying flat. Figure 6a shows the tilting element 110 in the position pivoted through 90°. In this position, the tilting element 110 is lifted in steps corresponding to the thickness of the stacks 38, by means of a further lifting element 112. Between the advance steps of the lifting element 112 in each case the uppermost stack 38 is pushed out by a plunger 113, by means of a further lifting element 114, onto the rod chain 60 which conveys the stacks 38 through the continuous oven 62.

Corrugated cardboard is manufactured in very large quantities. Modern corrugated cardboard manufacturing machines therefore produce corrugated cardboard with a width of 2.5 m at about 400 m/min. The requirements on the paper to be used are therefore very high. The papers are therefore selected and correspondingly more expensive. The non-selected papers, for example those having fluctuations in the paper thickness beyond a specific limiting value, can therefore be obtained cost-effectively, although they are qualitatively of the same value, except for processing on high-capacity corrugated cardboard machines. For the method described, older, slower (for example 60 m/min) machine can be re-equipped and, because of the lower speed are also able to process those paper grades which are unsuitable for the manufacture of corrugated cardboard on high-capacity machines, but are otherwise of equally high value, and which can be obtained cost-effectively.

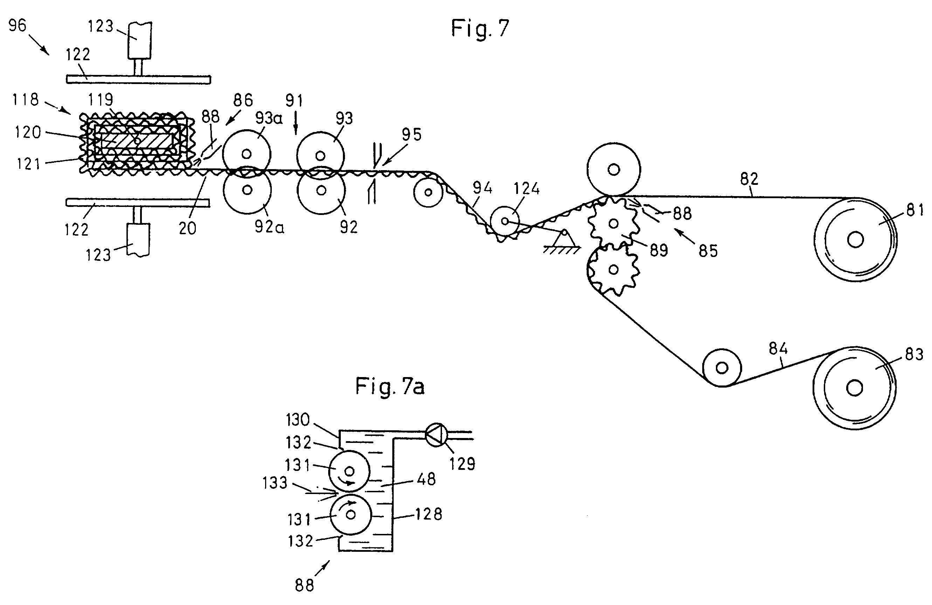

A further apparatus for manufacturing the cores is illustrated in Figures 7 and 7a. The two paper webs 82, 84 are once more coated over their entire area on their mutually facing sides in the corrugated cardboard manufacturing machine 80 by means of the coating station 85. In this case, this is performed by a single flat nozzle 88, which is arranged directly at the corrugating roll 89 and simultaneously sprays both the paper webs 82, 84. The transverse cutter 95 is arranged upstream of the longitudinal cutting device 91. The latter comprises two rows, arranged one behind the other, of cutting knives 92, 93, 92a, 93a, the knives 92a, 93a being axially mutually offset with respect to the knives 92, 93 by the width b of the strips 20. This reduces the risk of the tearing of the corrugated cardboard 94.

The stacking device 96 is in this case a winder 118. The latter comprises a flat winding mandrel 120, which is of rectangular cross-section, is prismatic, can be rotated about an axis 119 and is driven by a motor (not shown), onto which the strips 20 are wound. Arranged directly upstream of the winding point is a further coating station 86 having a flat nozzle 88, which coats the still uncoated side of the two paper webs 82, 84 over their entire area with the coating material 48. In order to obtain a coil 121 which is as parallelpiped-shaped as possible, two parallel press plates 122 are provided, which are periodically pressed against the coil 121 by means of lifting elements 123. Because of the coil 121 being rectangular in cross-section, and because of the periodic pressing, the drawing-off of the strips 20 at the winder 118 is not uniform. This is compensated for by a store, formed by a weight-loaded dancer roll 124. As soon as the coil 121 has been wound completely, the corrugated cardboard is cut transversely using the transverse cutter 95. The coil 121 is then stripped off the winding mandrel 120 and pressed once more, for example using pressing plates 122, so that the cavity in the centre of the coil vanishes. The individual coils 22 or stacks 38 are then separated from one another, as shown in Figure 6a, and the coating material is hardened.

In order that the individual stacks 38 do not bond together during the winding, further stationary, thin wires or metal sheets can be arranged in the winder 118 at the spacing of the strip width, extending as far as the winding mandrel 120. In order to begin a new coil 121, the strips 20, or with the longitudinal cutting device 91 lifted, the corrugated cardboard 94 is laid around the mandrel 128 by hand with about two turns, whereupon the winding operation begins once more.

The wound-up core has the advantage that it has approximately the same bending strength in both directions.

Figure 7a shows a preferred embodiment of the flat nozzles 88. It comprises a chamber 128, to which the coating material 48 is fed by means of a pump 129. Oppositely rotating rolls 131 with a low, adjustable distance from one another are rotatably mounted adjacent to one wall 130 of the chamber 128. The rolls 131 are driven in opposite directions in the direction of rotation illustrated and are sealed off in relation to the wall 130 using seals 132. The spray jet 133 of the coating material emerges through the narrow gap between the rolls 131. This design of the spray nozzles 88 has the advantage that no coating material can be deposited at the exit gap, since this is continuously cleaned by the seals 132 and, if appropriate, additional wipers.

In a deviation from the embodiment described, the coil 121 can also be wound on a cylindrical mandrel 121 and, after being stripped off from the mandrel 120, can be pressed to have an approximately rectangular cross-section. This variant has the advantage that the winding operation is simpler and continuous. However, larger corner radii of the finished honeycomb cores 22 result.

## Claims

1. A method of manufacturing a core (22) of corrugated cardboard, comprising the steps of superimposing a multiplicity of layers of corrugated cardboard, cutting the layers perpendicular to a longitudinal direction of the corrugations of the corrugated cardboard, coating the layers throughout with a liquid, hardenable coating material (48) containing water glass and hardening the coating material (48).

2. The method of claim 1, wherein the step of coating the layers is performed in a corrugated cardboard manufacturing machine (80).

3. The method of claim 1, wherein the step of cutting the layers into strips (20) of a width (b) according to the thickness of the core (22) is performed prior to the step of superimposing the multiplicity of layers.

4. The method of claim 3, wherein stacks (38) of the strips are formed and laid flat with the longitudinal direction of the corrugations being substantially vertical, wherein the liquid coating material (48) is applied on an upper surface (39) of each stack (38), wherein the coating material (48) is blown through the corrugations by an air stream, and wherein surplus coating material exiting from the lower surface of the stack is collected.

5. A core of corrugated cardboard with two parallel face surfaces (39), comprising a multiplicity of layers of corrugated cardboard, the longitudinal direction of the corrugations of the corrugated cardboard being perpendicular to the face surfaces (39), the core (22) being coated throughout with a hardened coating material (48) containing water glass.

6. A sandwich board comprising a core (22) according to claim 5 and a covering board (25, 28, 58) on at least one of the face surfaces (39) of the core and bonded to the core.

7. The sandwich board (26) of claim 6, comprising a plurality of superimposed cores (22) and a covering board (25, 29, 58) on each of the face surfaces of all cores.

8. The sandwich board of claim 7, comprising three cores (22) and four covering boards (25, 29, 58), the board being rectangular, the middle core (22) being recessed with respect to the covering boards (25, 29, 58) on two opposite sides and the two outer cores (22) being recessed with respect to the covering boards (25, 29, 58) on the two other opposite sides.

9. An apparatus for performing the method of claim 1, comprising:
- a stacking means (36, 96) for superimposing a multiplicity of corrugated cardboard layers,
- a cutting means (14, 91) for cutting the layers perpendicular to the longitudinal direction of the corrugations into strips (20) with a width (b) according to the thickness of the core (22) to be manufactured,
- a coating means (46, 85, 86) to coat the layers throughout with a liquid, hardenable coating material (48) containing water glass, and
- a hardening means (62) for hardening the coating material.

10. The apparatus of claim 9, wherein the cutting means (14, 91) is arranged upstream of the stacking means (36, 96).

11. The apparatus of claim 9, wherein the coating means (85, 86) is arranged in a cardboard manufacturing machine (80) and comprises a coating device (87, 88) for each of the paper webs (82, 84) of which the corrugated cardboard (94) is composed.

12. The apparatus of claim 11, wherein the coating devices (87, 88) are arranged such that they coat each paper web (82, 84) on both sides over their entire surface.

13. The apparatus of claim 9, wherein the stacking means (118) is a winder which winds the layers into a roll (121).

14. The apparatus of claim 9, wherein the coating means (46) comprises a conveying means (42) for transporting a stack (38) of superimposed strips (20) of corrugated cardboard, the longitudinal direction of the corrugations being substantially vertical, the coating means comprising at least one nozzle (46) above the conveying means (42) to apply a screen of the coating material (48) on an upper surface (39) of the stack (38), a blowing means (46a) to blow the coating material through the corrugations, and a collecting means (56) for collecting surplus coating material exiting from the lower surface of the stack (38).

15. Use of the sandwich board according to claim 6 for the construction of buildings.

## Patentansprüche

1. Verfahren zum Herstellen eines Kerns (22) aus Wellkarton, umfassend folgende Schritte: Übereinanderschichten einer Vielzahl von Schichten aus Wellkarton, Schneiden der Schichten senkrecht zu einer Längsrichtung der Wellungen des Wellkartons, durchgehendes Überziehen der Schichten mit einem flüssigen, aushärtbaren, Wasserglas enthaltenden Beschichtungsmaterial (48) und Aushärten des Beschichtungsmaterials (48).

2. Verfahren nach Anspruch 1, wobei der Schritt des Überziehens der Schichten in einer zur Herstellung von Wellkarton dienenden Maschine (80) durchgeführt wird.

3. Verfahren nach Anspruch 1, wobei der Schritt des Schneidens der Schichten in Streifen (20) mit einer der Dicke des Kerns (22) entsprechenden Breite (b) vor dem Schritt des Übereinanderschichtens der Vielzahl von Schichten durchgeführt wird.

4. Verfahren nach Anspruch 3, wobei aus den Streifen Stapel (38) gebildet und flach zur Längsrichtung der im wesentlichen senkrechten Wellungen aneinandergelegt werden, wobei das flüssige Beschichtungsmaterial auf einer oberen Oberfläche (39) jedes Stapels (38) aufgetragen wird, wobei das Beschichtungsmaterial (48) mittels eines Luftstroms durch die Wellungen geblasen wird, und wobei das aus der unteren Oberfläche des Stapels austretende überschüssige Material aufgefangen wird.

5. Kern aus Wellkarton mit zwei parallelen Stirnflächen (39), umfassend eine Vielzahl von Schichten aus Wellkarton, wobei die Längsrichtung der Wellungen des Wellkartons senkrecht zu den Stirnflächen (39) verläuft, wobei der Kern (22) durchgehend mit einem gehärteten Wasserglas enthaltenden Beschichtungsmaterial (48) überzogen wird.

6. Verbundplatte, umfassend einen Kern (22) nach Anspruch 5, und eine Deckplatte (25, 28, 58) auf mindestens einer der Stirnflächen (39) des Kerns, wobei die Deckplatte mit dem Kern verleimt ist.

7. Verbundplatte (26) nach Anspruch 6, umfassend eine Vielzahl von übereinandergeschichteten Kernen (22) und eine Deckplatte (25, 29, 58) auf jeder der Stirnflächen aller Kerne.

8. Verbundplatte nach Anspruch 7, umfassend drei Kerne (22) und vier Deckplatten (25, 29, 58), wobei die Platte rechteckig ist, wobei der mittlere Kern (22) in bezug auf die Deckplatten (25, 29, 58) auf zwei gegenüberliegenden Seiten zurückversetzt ist und die zwei äusseren Kerne (22) in bezug auf die Deckplatten (25, 29, 58) auf den zwei anderen gegenüberliegenden Seiten zurückversetzt sind.

9. Vorrichtung zum Durchführen des Verfahrens nach Anspruch 1, umfassend:
- ein Stapelmittel (36, 96) zum Übereinanderschichten einer Vielzahl von Wellkartonschichten,
- ein Schneidemittel (14, 91) zum Schneiden der Schichten senkrecht zur Längsrichtung der Wellungen in Streifen (20) mit einer der Dicke des herzustellenden Kerns (22) entsprechenden Breite (b),
- ein Beschichtungsmittel (46, 85, 86) zum durchgehenden Überziehen der Schichten mit einem flüssigen, aushärtbaren Beschichtungsmaterial, das Wasserglas enthält, und
- ein Härtungsmittel (62) zum Aushärten des Beschichtungsmaterials.

10. Vorrichtung nach Anspruch 9, wobei das Schneidemittel (14, 91) vor dem Stapelmittel (36, 96) angeordnet ist.

11. Vorrichtung nach Anspruch 9, wobei das Beschichtungsmittel (85, 86) in einer für die Herstellung von Wellkarton bestimmten Maschine (80) angeordnet ist und für jede der Papierbahnen (82, 84), welche den Wellkarton bilden, eine Beschichtungsvorrichtung (87, 88) umfasst.

12. Vorrichtung nach Anspruch 11, wobei die Beschichtungsvorrichtungen (87, 88) derart angeordnet sind, dass sie jede Papierbahn (82, 84) beidseitig auf der gesamten Oberfläche beschichten.

13. Vorrichtung nach Anspruch 9, wobei das Stapelmittel (118) eine Winde ist, welche die Schichten zu einer Rolle wickelt.

14. Vorrichtung nach Anspruch 9, wobei das Beschichtungsmittel (46) ein Fördermittel (42) zum Transportieren eines Stapels (38) von übereinandergeschichteten Wellkartonstreifen (20) umfasst, wobei die Längsrichtung der Wellungen im wesentlichen vertikal ist, wobei das Beschichtungsmittel mindestens eine Düse (46) oberhalb des Fördermittels (42) umfasst, um eine Lage Beschichtungsmaterial (48) auf einer oberen Oberfläche (39) des Stapels (38) anzubringen, ein Gebläsemittel (46a) zum Blasen des Beschichtungsmaterials durch die Wellungen, und ein Auffangmittel (56) zum Auffangen des aus der unteren Oberfläche des Stapels (38) austretenden überschüssigen Beschichtungsmaterials.

15. Verwendung der Verbundplatte nach Anspruch 6 zur Herstellung von Gebäuden.

## Revendications

1. Procédé de fabrication d'une âme (22) en carton ondulé, comprenant les étapes de superposition d'une multiplicité de couches de carton ondulé, de découpe des couches perpendiculairement à une direction longitudinale des ondulations du carton ondulé, de revêtement des couches par une matière de revêtement liquide pouvant être durcie (48) contenant du verre soluble et de durcissement de la matière de revêtement (48).

2. Procédé selon la revendication 1, dans lequel l'étape de revêtement des couches est effectuée dans une machine de fabrication de carton ondulé (80).

3. Procédé selon la revendication 1, dans lequel l'étape de découpe des couches en bandes (20) d'une largeur (b) selon l'épaisseur de l'âme (22) est effectuée avant l'étape de superposition de la multiplicité de couches.

4. Procédé selon la revendication 3, dans lequel des piles (38) de bandes sont formées et étendues à plat, la direction longitudinale des ondulations étant sensiblement verticale, dans lequel la matière de revêtement liquide (48) est appliquée sur une surface supérieure (39) de chaque pile (38), dans lequel la matière de revêtement (48) est soufflée à travers les ondulations par un jet d'air, et dans lequel le surplus de matière de revêtement sortant de la surface inférieure de la pile est recueilli.

5. Ame en carton ondulé ayant deux surfaces frontales parallèles (39), comprenant une multiplicité de couches de carton ondulé, la direction longitudinale des ondulations du carton ondulé étant perpendiculaire aux surfaces frontales (39), l'âme (22) étant revêtue par une matière de revêtement durcie (48) contenant du verre solide.

6. Panneau sandwich comprenant une âme (22) selon la revendication 5 et une plaque de couverture (25, 28, 58) sur au moins une des surfaces frontales (39) de l'âme et lié à l'âme.

7. Panneau sandwich (26) selon la revendication 6, comprenant une pluralité d'âmes superposées (22) et une plaque de couverture (25, 29, 58) sur chacune des surfaces frontales de toutes les âmes.

8. Panneau sandwich selon la revendication 7, comprenant trois âmes (22) et quatre plaques de couverture (25, 29, 58), le panneau étant rectangulaire, l'âme intermédiaire (22) étant en retrait par rapport aux plaques de couverture (25, 29, 58) sur deux côtés opposés et les deux âmes extérieures (22) étant en retrait par rapport aux plaques de couverture (25, 29, 58) sur les deux autres côtés opposés.

9. Appareil pour réaliser le procédé selon la revendication 1, comprenant :
- des moyens d'empilage (36, 96) pour superposer une multiplicité de couches de carton ondulé,
- des moyens de découpe (14, 91) pour découper les couches perpendiculairement à la direction longitudinale des ondulations en bandes (20) ayant une largeur (b) selon l'épaisseur de l'âme (22) à fabriquer,
- des moyens de revêtement (46, 85, 86) pour revêtir les couches par une matière de revêtement liquide pouvant être durcie (48) contenant du verre soluble, et
- des moyens de durcissement (62) pour durcir la matière de revêtement.

10. Appareil selon la revendication 9, dans lequel les moyens de découpe (14, 91) sont agencés en amont des moyens d'empilage (36, 96).

11. Appareil selon la revendication 9, dans lequel les moyens de revêtement (85, 86) sont agencés dans une machine de fabrication de carton (80) et comprennent un dispositif de revêtement (87, 88) pour chacune des toiles de papier (82, 84) constituant le carton ondulé (94).

12. Appareil selon la revendication 11, dans lequel les dispositifs de revêtement (87, 88) sont agencés de sorte qu'ils revêtent chaque toile de papier (82, 84) des deux côtés sur la totalité de leur surface.

13. Appareil selon la revendication 9, dans lequel les moyens d'empilage (118) sont constitués par un enrouleur qui enroule les couches en un rouleau (121).

14. Appareil selon la revendication 9, dans lequel les moyens de revêtement (46) comprennent des moyens d'acheminement (42) pour transporter une pile (38) de bandes superposées (20) de carton ondulé, la direction longitudinale des ondulations étant sensiblement verticale, les moyens de revêtement comprenant au moins une buse (46) au-dessus des moyens d'acheminement (42) pour appliquer un masque de la matière de revêtement (48) sur une surface supérieure (39) de la pile (38), des moyens de soufflage (46a) pour souffler la matière de revêtement à travers les ondulations, et des moyens de recueil (56) pour recueillir le surplus de matière de revêtement sortant de la surface inférieure de la pile (38).

15. Utilisation du panneau sandwich selon la revendication 6 pour la construction de bâtiments.
